# EUROPEAN PATENT SPECIFICATION

(11) **EP 2 778 039 B1**
(45) Date of publication and mention of the grant of the patent: **14.06.2017**
(21) Application number: 12844460.1
(22) Date of filing: 25.10.2012
(51) Int. Cl.: B63B 1/38, B63H 21/14, B63J 3/02, F02B 37/00

(54) **AIR SUPPLY DEVICE FOR AIR-LUBRICATED SHIP**
LUFTZUFUHRVORRICHTUNG FÜR LUFTGESCHMIERTES SCHIFF
DISPOSITIF DE FOURNITURE D'AIR POUR NAVIRE LUBRIFIÉ PAR L'AIR

(30) Priority: 25.10.2011 JP 2011233695
(43) Date of publication of application: 17.09.2014
(73) Proprietor: National Institute of Maritime, Port and Aviation Technology, Tokyo 181-0004 (JP); Japan Marine United Corporation, Minato-ku Tokyo 108-0014 (JP); Imabari Shipbuilding Co., Ltd., Imabari City, Ehime 799-2195 (JP); Oshima Shipbuilding Co. Ltd., Nagasaki 857-2494 (JP); Kawasaki Jukogyo Kabushiki Kaisha, Kobe-shi, Hyogo 650-8670 (JP); Sumitomo Heavy Industries Marine & Engineering Co., Ltd., Tokyo 141-6025 (JP); Tsuneishi Shipbuilding Co., Ltd., Hiroshima 720-0394 (JP); Mitsui Engineering & Shipbuilding Co., Ltd., Chuo-ku Tokyo 104-8439 (JP); Mitsubishi Heavy Industries, Ltd., Tokyo 108-8215 (JP); Nippon Yusen Kabushiki Kaisha, Tokyo 100-0005 (JP)
(72) Inventor: FUKUDA, Tetsugo, Mitaka-shi Tokyo 181-0004 (JP); HARUMI, Kazuyoshi, Mitaka-shi Tokyo 181-0004 (JP); MURATA, Hiroyuki, Mitaka-shi Tokyo 181-0004 (JP); ADACHI, Masaki, Mitaka-shi Tokyo 181-0004 (JP); KAWASHIMA, Hideki, Mitaka-shi Tokyo 181-0004 (JP); HINATSU, Munehiko, Mitaka-shi Tokyo 181-0004 (JP); ISHIGURO, Tsuyoshi, Tokyo 108-0014 (JP); HIGAKI, Yukito, Imabari City Ehime 799-2195 (JP); MATSUO, Kazuaki, Saikai city Nagasaki 857-2494 (JP); EBIRA, Kazuyuki, Kobe-shi Hyogo 650-8670 (JP); MURAKAMI, Kyoji, Yokosuka-shi Kanagawa 237-8555 (JP); SHI, Jiangang, Fukuyama Hiroshima 720-0394 (JP); SHIBATA, Shigeyuki, Tokyo 104-8439 (JP); MIZOKAMI, Shuji, Tokyo 108-8215 (JP); KEIRINBOH, Satoshi, Tokyo 108-0014 (JP); KUWADA, Keishi, Tokyo 100-0005 (JP); ARAI, Kazutoshi, Tokyo 100-0005 (JP)
(74) Representative: Körfer, Thomas
(86) International application number: PCT/JP2012/006856
(87) International publication number: WO 2013/061596

(56) References cited:
- JP-A- H11 348 869
- JP-A- H11 348 871
- JP-A- 2010 228 679

## Description

### [TECHNICAL FIELD]

The present invention relates to an air supply apparatus of an air lubrication type ship for reducing friction resistance of water along a ship's bottom outer surface of a ship during marine navigation.

### [BACKGROUND TECHNIQUE]

Generally, a ship receives friction resistance of water during marine navigation on its submerged surface of a ship's bottom. Especially in the case of a large ship, most portion of resistance of ship's hull is derived from friction resistance generated by relative flow of outside water in the ship's bottom.

In air lubrication, air is ejected to surroundings of the ship's hull to reduce friction resistance. If friction resistance of a ship's hull is reduced by the air lubrication, a high energy saving effect can be obtained, and this is effective means for CO₂ emission reduction from the ship.

In the case of a deep-draft large ocean-going ship, however, energy required for sending air to a ship's bottom is large, and if an air lubrication method using a blower only is employed, there are limitations for obtaining the energy saving effect. Hence, there are conceived systems which utilize pressurized air or exhaust gas existing around a turbocharger of a main engine as shown the following patent documents.

Patent document 1 and patent document 2 propose an apparatus which utilizes scavenging gas which is pressurized air existing between an inter-cooler and a main engine.

Patent document 3 and patent document 4 propose an apparatus which utilizes exhaust gas of a main engine.

Patent document 5 proposes an apparatus which utilizes low pressure pressurized air extracted from a low pressure location of a turbocharger.

Patent document 6 proposes an apparatus which utilizes pressurized air and/or exhaust gas existing between a turbocharger and a main engine.

Patent document 7 proposes an apparatus including compressed gas supply means which is rotated and driven by exhaust gas, and this apparatus utilizes compressed gas of the compressed gas supply means. Patent document 8 proposes an apparatus which utilizes pressurized air existing between a turbocharger and a main engine.

### [PRIOR ART DOCUMENT]

### [PATENT DOCUMENTS]

[Patent Document 1] Japanese Patent Application Laid-open No.H11-348870
[Patent Document 2] Japanese Patent Application Laid-open No.H11-348871
[Patent Document 3] Japanese Patent Application Laid-open No.H11-348869
[Patent Document 4] Japanese Patent Application Laid-open No.2001-97276
[Patent Document 5] Japanese Patent Application Laid-open No.2001-48082
[Patent Document 6] Japanese Patent Application Laid-open No.2010-23631
[Patent Document 7] Japanese Patent Application Laid-open No.2010-274905
[Patent Document 8] Japanese Patent Application
   Laid-open No.2010-228679

### [SUMMARY OF THE INVENTION]

### [PROBLEM TO BE SOLVED BY THE INVENTION]

Pressurized air pressure (scavenging pressure) supplied by a turbocharger to a main engine is proportional to output of the main engine. That is, there exist such characteristics that when a main engine load is low, the pressurized air pressure is low and when the main engine load is high, the pressurized air pressure becomes high. Exhaust gas also has similar characteristics that exhaust gas is proportional to output of the main engine.

On the other hand, draft is varied depending upon a loaded state. Hence, when a ship is fully loaded and a main engine load is low, scavenging pressure of the main engine becomes lower than draft pressure, and air lubrication can not be applied in some cases.

Concerning gas pressure which is varied depending upon output of a main engine, and concerning draft pressure which is varied depending upon a loaded state, patent document 1 to patent document 7 do not disclose to widen a region in which air lubrication can be applied or do not disclose to take energy efficiency into consideration.

Hence, it is an object of the present invention to provide an air supply apparatus of an air lubrication type ship in which even if pressurized air pressure supplied to a main engine by a turbocharger is varied by output of the main engine and even if draft pressure is varied due to a loaded state, the air supply apparatus can increase the pressurized air pressure and can eject the pressurized air in accordance with the variations. According to the present invention, it is possible to provide an air supply apparatus of an air lubrication type ship having high energy efficiency and capable of enhancing

### [MEANS FOR SOLVING THE PROBLEM]

A first aspect of the invention provides an air supply apparatus of an air lubrication type ship which ejects air to surroundings of a ship's hull to reduce friction resistance, the air supply apparatus comprising a turbocharger which supplies pressurized air to a main engine of the air lubrication type ship, taking-out means which takes out a portion of the pressurized air, pressure-increasing means which further increases pressure of the pressurized air which is taken out by the taking-out means, a pressure-increasing path through which pressure-increased air whose pressure is increased by the pressure-increasing means is supplied, a bypass path which bypasses the pressure-increasing means, and path selecting means which selects the pressure-increasing path and the bypass path, wherein the path selecting means selects the pressure-increasing path and/or the bypass path to supply the pressure-increased air and/or the pressurized air and eject the same to the surroundings of the ship's hull. According to the this aspect, when the bypass path is selected, air is ejected to the surroundings of the ship's hull using pressurized air which is supplied to the main engine, and when the pressure-increasing path is selected, it is possible to eject air to the surroundings of the ship's hull using pressure-increased air obtained by further increasing pressure of the pressurized air by the pressure-increasing means. That is, it is possible to select ejection carried out only by pressurized air and ejection using pressure-increased air which is assisted by the pressure-increasing means. Therefore, according to the invention of the first aspect, even if pressurized air pressure supplied to the main engine is varied by output of the main engine, and even if draft pressure is varied by a loaded state, pressure of the pressurized air can be increased and the pressurized air can be ejected in accordance with these variations. Thus, it is possible to realize an air lubrication type ship having high energy efficiency and capable of enhancing the energy saving effect. Here, the term "pressurized air" used in this application also includes air which is pressurized in the turbocharger contributes to combustion in the main engine and which becomes pressurized exhaust gas.

According to a second aspect of the invention, in the air supply apparatus of the air lubrication type ship of the first aspect, the air supply apparatus further includes at least one more pressure-increasing means, at least one more pressure-increasing path and at least one more path selecting means, and the pressure-increased air can be supplied by operation of an arbitrary number of the pressure-increasing means. According to the this aspect, it is possible to increase pressure of the pressurized air and to eject the pressurized air in accordance with variation in pressurized air pressure and variation in draft pressure by switching the plurality of pressure-increasing means. Therefore, it is possible to further enhance the energy efficiency and the energy saving effect.

According to a third aspect of the invention, in the air supply apparatus of the air lubrication type ship of the first or second aspect, the pressure-increasing means is further provided with atmosphere taking-in means which takes in air from atmosphere, and pressure of the air from the atmosphere can be increased and the air can be supplied. According to this aspect, air can be ejected to the surroundings of the ship's hull using air from atmosphere separately from the pressurized air. When draft pressure is low for example, air from atmosphere can be supplied to the surroundings of the ship's hull. Therefore, it is possible to further enhance the energy efficiency and the energy saving effect.

According to a fourth aspect of the invention, in the air supply apparatus of the air lubrication type ship of the third aspect, the path selecting means selects the bypass path, the pressurized air is supplied through the bypass path while bypassing the pressure-increasing means, and the atmosphere taking-in means is controlled, then pressure of air from the atmosphere is increased and the air is supplied through the pressure-increasing path. According to this aspect, pressurized air is supplied through the bypass path, and air from the atmosphere is supplied through the pressure-increasing path. Therefore, it is possible to increase an ejection amount of air to the surroundings of the ship's hull, to enhance the friction reducing effect, and to further enhance the energy saving effect.

According to a fifth aspect of the invention, in the air supply apparatus of the air lubrication type ship of any one of the first to fourth aspects, the pressurized air which is taken out by the taking-out means is scavenging gas as a portion of the pressurized air sent from a compressor which configures the turbocharger to the main engine. According to this aspect, by utilizing the scavenging gas, it is possible to reduce energy which is required for the pressure-increasing means.

According to a sixth aspect of the invention, in the air supply apparatus of the air lubrication type ship of any one of the first to fifth aspects, the air supply apparatus further includes draft detecting means which detects draft of the ship's hull and control means which controls the path selecting means and the pressure-increasing means, and the control means carries out control based on a detection result of the draft detecting means. According to this aspect, the draft detecting means can detect variation in draft pressure caused by a loaded state, and the control means can control in accordance with draft pressure so that pressurized air and pressure-increased air can appropriately be combined with each other and they can be supplied, and it is possible to accurately set a condition under which the air lubrication can be applied. Therefore, it is possible to select an air supply method which becomes that condition and which has high energy efficiency.

According to a seventh aspect of the invention, in the air supply apparatus of the air lubrication type ship of the sixth aspect, the air supply apparatus further includes load detecting means which detects a load of the main engine, and the control means carries out control based on a detection result of the load detecting means. According to this aspect, the load detecting means can detect variation in pressurized air pressure caused by output of the main engine, and the control means carries out control in accordance with pressurized air pressure. Therefore, it is possible to select an air supply method which becomes that condition and which has high energy efficiency.

According to an eighth aspect of the invention, in the air supply apparatus of the air lubrication type ship of the seventh aspect, the load detecting means detects scavenging gas pressure of the turbocharger. According to this aspect, by detecting variation caused by output of the main engine by means of scavenging gas pressure, it is possible to detect variation in pressurized air pressure without time lag. Hence, it is possible to carry out control to follow variation in a load. Therefore, it is possible to enhance the energy efficiency.

According to a ninth aspect of the invention, in the air supply apparatus of the air lubrication type ship of any one of the first to eighth aspects, the air supply apparatus further includes a flow rate adjusting valve which is located between the turbocharger and the pressure-increasing means and which adjusts a flow rate of the pressurized air. According to this aspect, the air supply apparatus includes the flow rate adjusting valve. Therefore, it is possible to moderate flow rate variation caused by influence of an operation state of the pressure-increasing means, and to stabilize a supply flow rate of pressurized air from the turbocharger to the main engine. Therefore, it is possible to prevent energy efficiency of the main engine from being deteriorated.

According to a tenth aspect of the invention, in the air supply apparatus of the air lubrication type ship of any one of the first to eighth aspects, the air supply apparatus further includes flow rate detecting means which detects a flow rate of the pressurized air from the turbocharger to the pressure-increasing means. According to this aspect, since the air supply apparatus includes the flow rate detecting means, it is possible to stably control a flow rate of pressurized air.

According to an eleventh aspect of the invention, in the air supply apparatus of the air lubrication type ship of the tenth aspect, a flow rate detection value detected by the flow rate detecting means is fed back to control the flow rate adjusting valve. According to this aspect, by controlling the flow rate adjusting valve, control for taking out pressurized air in accordance with the set flow rate can be carried out, and it is possible to appropriately maintain a pressurized air amount to the main engine, and to effectively enhance a pressure increasing operation in the pressure-increasing means. Further, even if any trouble is generated in the pressure-increasing means, since scavenging pressure can be adjusted by the flow rate adjusting valve, influence of this trouble is not exerted to the main engine, and a safety level is high.

According to a twelfth aspect of the invention, in the air supply apparatus of the air lubrication type ship of any one of the ninth to eleventh aspects, an opening degree of the flow rate adjusting valve or a flow rate detection value detected by the flow rate detecting means is fed back to control the pressure-increasing means. According to this aspect, it is possible to control the pressure-increasing means in accordance with a set opening degree or a set flow rate, and a predetermined flow rate can be obtained.

According to a thirteenth aspect of the invention, in the air supply apparatus of the air lubrication type ship of any one of the first to twelfth aspects, a blower whose rotational speed can be controlled is used as the pressure-increasing means. According to this aspect, it is possible to carry out the pressure-increasing adjustment by the blower in accordance with variation in pressurized air pressure or draft pressure.

According to a fourteenth aspect of the invention, in the air supply apparatus of the air lubrication type ship of the thirteenth aspects, the rotational speed of the blower is detected, and a detected rotational speed detection value is fed back to control the blower. According to this aspect, since it is possible to carry out control based on the rotational speed of the blower, and it is possible to carry out control without carrying out detection of the flow rate detecting means and the like.

According to a fifteenth aspect of the invention, in the air supply apparatus of the air lubrication type ship of any one of the ninth to fourteenth aspects, the air supply apparatus further includes ship's hull movement detecting means which detects movement of the ship' s hull, and a ship' s hull movement detection value of the ship's hull movement detecting means is fed forward to control the flow rate adjusting valve and/or the pressure-increasing means. According to this aspect, since the air supply apparatus includes the ship's hull movement detecting means, it is possible to forecast variation of draft or the like from the ship's hull movement detection value, to change the combination of pressurized air and pressure-increased air, and to control a flow rate.

### [EFFECT OF THE INVENTION]

According to the invention, even if pressurized air pressure supplied to the main engine by the turbocharger is varied by output of the main engine, and even if draft pressure is varied by a loaded state, pressure of the pressurized air can be increased and the pressurized air can be ejected in accordance with these variations. Thus, it is possible to realize an air lubrication type ship having high energy efficiency and capable of enhancing the energy saving effect.

If the air supply apparatus includes the plurality of pressure-increasing means, the plurality of pressure-increasing path and the plurality of path selecting means, and if pressure-increased air can be supplied by operation of an arbitrary number of pressure-increasing means, it is possible to increase pressure of the pressurized air and to eject the pressurized air in accordance with variation in pressurized air pressure and variation in draft pressure by switching the plurality of pressure-increasing means. Therefore, it is possible to further enhance the energy efficiency and the energy saving effect.

If the pressure-increasing means is further provided with the atmosphere taking-in means for taking in air from atmosphere and pressure of air from the atmosphere can be increased and supplied, the bypass path supplies pressurized air, and the pressure-increasing path supplies air from the atmosphere. Therefore, it is possible to increase an ejection amount of air to the surroundings of the ship' s hull, to enhance the friction reducing effect, and to further enhance the energy saving effect.

The path selecting means selects the bypass path, the pressurized air is supplied through the bypass path while bypassing the pressure-increasing means, and the atmosphere taking-in means is controlled, then pressure of air from the atmosphere is increased and the air is supplied through the pressure-increasing path. According to this, pressurized air is supplied through the bypass path, and air from the atmosphere is supplied through the pressure-increasing path. Therefore, it is possible to increase an ejection amount of air to the surroundings of the ship's hull, to enhance the friction reducing effect, and to further enhance the energy saving effect.

The pressurized air which is taken out by the taking-out means is scavenging gas as a portion of the pressurized air sent from a compressor which configures the turbocharger to the main engine. According to this, by utilizing the scavenging gas, it is possible to reduce energy which is required for the pressure-increasing means.

The air supply apparatus further includes draft detecting means which detects draft of the ship's hull and control means which controls the path selecting means and the pressure-increasing means, and the control means carries out control based on a detection result of the draft detecting means. According to this, the draft detecting means can detect variation in draft pressure caused by a loaded state, and the control means can control in accordance with draft pressure so that pressurized air and pressure-increased air can appropriately be combined with each other and they can be supplied, and it is possible to accurately set a condition under which the air lubrication can be applied. Therefore, it is possible to select an air supply method which becomes that condition and which has high energy efficiency.

The air supply apparatus further includes load detecting means which detects a load of the main engine, and the control means carries out control based on a detection result of the load detecting means. According to this, the load detecting means can detect variation in pressurized air pressure caused by output of the main engine, and the control means carries out control in accordance with pressurized air pressure. Therefore, it is possible to select an air supply method which becomes that condition and which has high energy efficiency.

The load detecting means detects scavenging gas pressure of the turbocharger. According to this, by detecting variation caused by output of the main engine by means of scavenging gas pressure, it is possible to detect variation in pressurized air pressure without time lag. Hence, it is possible to carry out control to follow variation in a load. Therefore, it is possible to enhance the energy efficiency.

The air supply apparatus further includes a flow rate adjusting valve which is located between the turbocharger and the pressure-increasing means and which adjusts a flow rate of the pressurized air. According to this, the air supply apparatus includes the flow rate adjusting valve. Therefore, it is possible to moderate flow rate variation caused by influence of an operation state of the pressure-increasing means, and to stabilize a supply flow rate of pressurized air from the turbocharger to the main engine. Therefore, it is possible to prevent energy efficiency of the main engine from being deteriorated.

The air supply apparatus further includes flow rate detecting means which detects a flow rate of the pressurized air from the turbocharger to the pressure-increasing means. According to this, since the air supply apparatus includes the flow rate detecting means, it is possible to stably control a flow rate of pressurized air.

A flow rate detection value detected by the flow rate detecting means is fed back to control the flow rate adjusting valve. According to this, by controlling the flow rate adjusting valve, control for taking out pressurized air in accordance with the set flow rate can be carried out, and it is possible to appropriately maintain a pressurized air amount to the main engine, and to effectively enhance a pressure increasing operation in the pressure-increasing means. Further, even if any trouble is generated in the pressure-increasing means, since scavenging pressure can be adjusted by the flow rate adjusting valve, influence of this trouble is not exerted to the main engine, and a safety level is high. A flow rate is set while maintaining margin so that such an opening degree that the flow rate adjusting valve is not fully opened, control to compensate variation of the pressure-increasing means is carried out by the flow rate adjusting valve, and a flow rate can be stabilized.

An opening degree of the flow rate adjusting valve or a flow rate detection value detected by the flow rate detecting means is fed back to control the pressure-increasing means. According to this, it is possible to control the pressure-increasing means in accordance with a set opening degree or a set flow rate, and a predetermined flow rate can be obtained.

A blower whose rotational speed can be controlled is used as the pressure-increasing means. According to this, it is possible to carry out the pressure-increasing adjustment by the blower in accordance with variation in pressurized air pressure or draft pressure.

The rotational speed of the blower is detected, and a detected rotational speed detection value is fed back to control the blower. According to this, since it is possible to carry out control based on the rotational speed of the blower, and it is possible to carry out control without carrying out detection of the flow rate detecting means and the like.

The air supply apparatus further includes ship's hull movement detecting means which detects movement of the ship' s hull, and a ship's hull movement detection value of the ship's hull movement detecting means is fed forward to control the flow rate adjusting valve and/or the pressure-increasing means. According to this, since the air supply apparatus includes the ship's hull movement detecting means, it is possible to forecast variation of draft or the like from the ship's hull movement detection value, to change the combination of pressurized air and pressure-increased air, and to control a flow rate.

### [BRIEF DESCRIPTION OF THE DRAWINGS]

Fig. 1 is a schematic block diagram of an air lubrication type ship provided with an air supply apparatus according to an embodiment of the present invention;
Fig. 2 is a schematic block diagram of the air supply apparatus of the air lubrication type ship showing paths which increase pressure of scavenging bypass gas to eject the same from an air supply port;
Fig. 3 is a schematic block diagram of the air supply apparatus of the air lubrication type ship showing paths which eject scavenging bypass gas from an air supply port without increasing pressure of the scavenging bypass gas;
Fig. 4 is a schematic block diagram of the air supply apparatus of the air lubrication type ship showing paths which separately eject scavenging bypass gas and air taken in from atmosphere from an air supply port;
Fig. 5 is a diagram showing a switching method under respective conditions wherein a lateral axis shows scavenging pressure (Ps) and a vertical axis shows draft pressure (Pd);
Fig. 6 is a schematic block diagram of an air supply apparatus according to another embodiment of the air lubrication type ship; and
Fig. 7 is a schematic block diagram of an air supply apparatus according to further another embodiment of the air lubrication type ship.

### [EXPLANATION OF SYMBOLS]

- 1: ship's hull
- 4: ship's bottom
- 6: main engine
- 7: air supply apparatus
- 10: turbocharger
- 21: taking-out path
- 22: flow rate adjusting valve
- 30a: first pressure-increasing means
- 30b: second pressure-increasing means
- 31: flow rate detecting means
- 32: valve-controller
- 33: blower controller
- 41a: first pressure-increasing path
- 41b: second pressure-increasing path
- 51: bypass path
- 61a: first on-off valve
- 61b: second on-off valve
- 62a: fourth on-off valve
- 62b: fifth on-off valve
- 63: third on-off valve
- 70: atmosphere taking-in path
- 71a: first atmosphere taking-in path
- 71b: second atmosphere taking-in path
- 72a: sixth on-off valve
- 72b: eighth on-off valve
- 73a: first atmosphere path
- 73b: second atmosphere path
- 74a: seventh on-off valve
- 74b: ninth on-off valve
- 80: air supply port
- 90: air path
- 110: control means
- 111: draft detecting means
- 112: load detecting means
- 113: ship's hull movement detecting means

### [MODE FOR CARRYING OUT THE INVENTION]

An air supply apparatus of an air lubrication type ship according to an embodiment of the present invention will be described below.

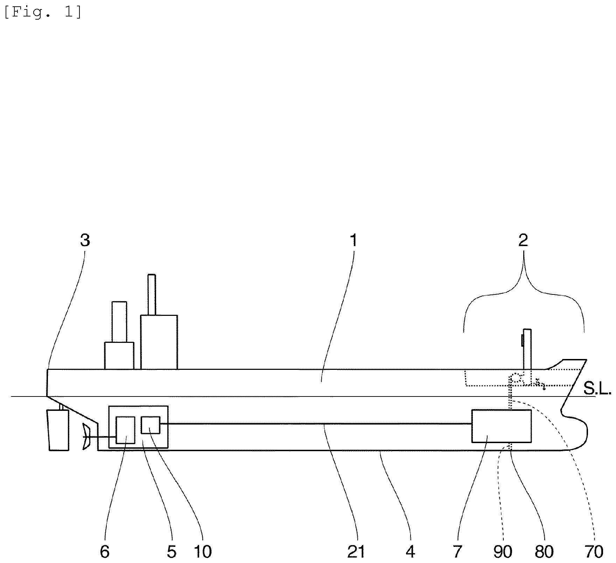

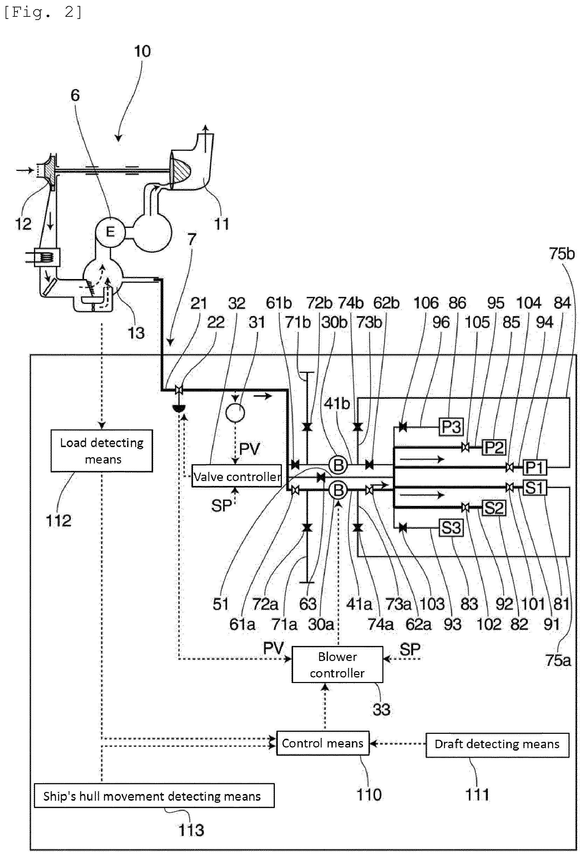

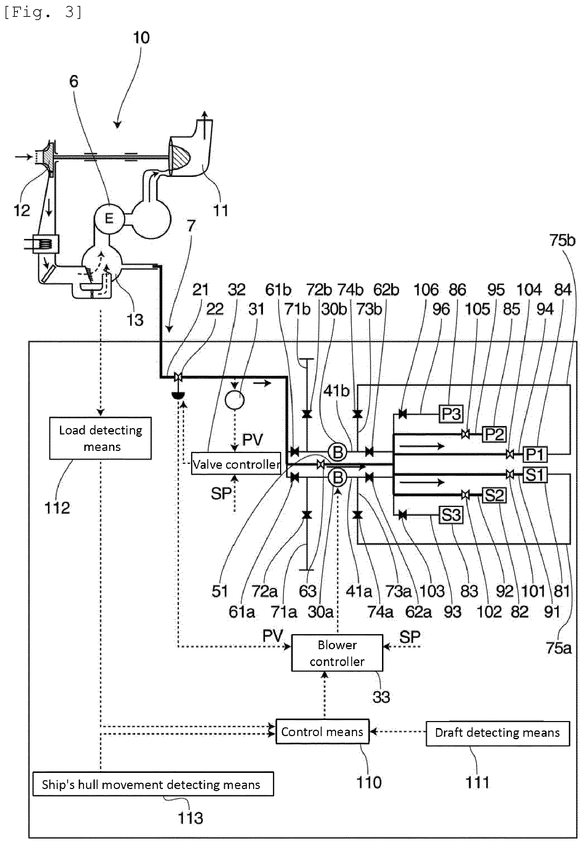

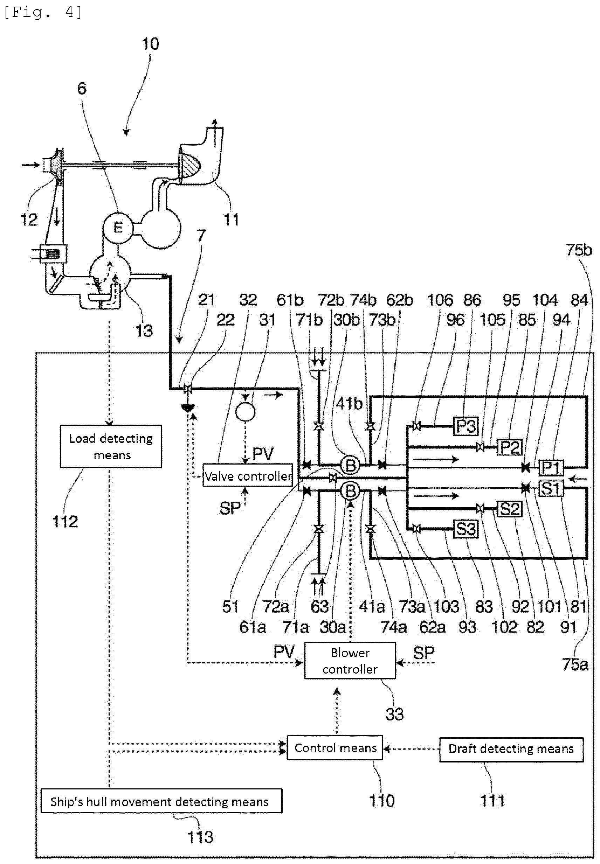

Fig. 1 is a schematic block diagram of the air lubrication type ship provided with the air supply apparatus according to the embodiment of the invention. Figs. 2 to 4 are schematic block diagrams of the air supply apparatus of the air lubrication type ship. Fig. 2 shows path which increase pressure of scavenging bypass gas to eject the same from an air supply port. Fig. 3 shows paths which eject scavenging bypass gas from an air supply port without increasing pressure of the scavenging bypass gas. Fig. 4 shows paths which separately eject scavenging bypass gas and air taken in from atmosphere from an air supply port.

As shown Fig. 1, the air lubrication type ship of the embodiment includes an air supply apparatus 7 (main part) on the side of a stem portion 2 of a ship's hull 1, and a drive source 5 which drives a propeller on the side of a stern 3. The ship's bottom 4 of the stem portion 2 is provided with an air supply port 80. If air is ejected as air bubbles to surroundings of a ship's bottom 4 of the ship's hull 1 from the air supply port 80 is possible to supply air bubbles to a wide region of the ship's bottom 4 below a sea level S.L., and it is possible to obtain a high friction resistance reducing effect.

If the air supply apparatus 7 is provided on the stem portion 2, an air path 90 reaching the air supply port 80 can be shortened. Therefore, it is possible to suppress a pressure loss in the air path 90, and to efficiently supply air to the air supply port 80.

The air supply port 80 may be provided on a side surface of the stem close to the ship's bottom 4, the ship's bottom 4 at which a width of the ship's hull 1 starts narrowing, or a side surface of the ship's hull 1.

The drive source 5 includes a main engine 6 which is an internal combustion engine, and a turbocharger 10 which supplies pressurized air to the main engine 6 and which is driven by exhaust gas of the main engine 6.

A portion of pressurized air before it is supplied to the main engine 6 is sent to the air supply apparatus 7 through a taking-out path 21.

The air supply apparatus 7 is provided with an atmosphere taking-in path 70 through which air is taken in from atmosphere.

Next, a configuration of the air supply apparatus will be described using Fig. 2.

A portion of pressurized air is introduced into the air supply apparatus 7 (main part) from the taking-out path 21.

The turbocharger 10 includes a turbine 11 which takes out power from an exhaust path of the main engine 6, a compressor 12 which is operated by the turbine 11, and a scavenging receiver 13 which introduces air pressurized by the compressor 12 into a cylinder of the main engine 6.

One end of the taking-out path 21 is connected to the scavenging receiver 13. Pressurized air is introduced into the taking-out path 21 from the scavenging receiver 13.

The other end of the taking-out path 21 is branched into three paths. Each of the path ends is provided with a first on-off valve 61a, a second on-off valve 61b and a third on-off valve 63.

The taking-out path 21 is provided with a flow rate adjusting valve 22 which adjusts a flow rate of pressurized air, and flow rate detecting means 31 which detects a flow rate of pressurized air. The flow rate adjusting valve 22 is fed back using a flow rate detection value detected by the flow rate detecting means 31 and is PID controlled. A flow rate detection value detected by the flow rate detecting means 31 is compared with a set value SP by a valve-controller 32, and the valve-controller 32 gives an operation signal to the flow rate adjusting valve 22 such that the flow rate detection value approaches the set value SP. The set value SP which is input to the valve-controller 32 sets an optimal flow rate that is suitable for output of the main engine for example.

Taking-out means is composed of the taking-out path 21, the flow rate adjusting valve 22, the flow rate detecting means 31 and the valve-controller 32.

A blower controller 33 feeds back a flow rate detection value detected by an opening degree of the flow rate adjusting valve 22, and controls first pressure-increasing means 30a. The flow rate detection value detected by the flow rate adjusting valve 22 is compared with a set value by the blower controller 33, and the blower controller 33 controls the rotational speed (rotational frequency) of the first pressure-increasing means 30a such that the flow rate detection value approaches the set value SP. The set value SP which is input to the blower controller 33 sets a constant (given) value in a range of 80 to 95% of the opening degree for example.

A first pressure-increasing path 41a is provided at its one end with the first on-off valve 61a and at its other end with a fourth on-off valve 62a. The first pressure-increasing path 41a is provided with the first pressure-increasing means 30a which further increases pressure of pressurized air which is taken out by the taking-out means. The first pressure-increasing path 41a supplies air whose pressure is increased by the first pressure-increasing means 30a.

A second pressure-increasing path 41b is provided at its one end with a second on-off valve 61b and at its other end with a fifth on-off valve 62b. The second pressure-increasing path 41b is provided with second pressure-increasing means 30b which further increases pressure of pressurized air taken out by the taking-out means. The second pressure-increasing path 41b supplies pressure-increased air whose pressure is increased by the second pressure-increasing means 30b.

A bypass path 51 which bypasses the first pressure-increasing means 30a and the second pressure-increasing means 30b is connected to a third on-off valve 63.

The path selecting means which selects the first pressure-increasing path 41a and the bypass path 51 is composed of the first on-off valve 61a, the third on-off valve 63 and the fourth on-off valve 62a.

Path selecting means which selects the second pressure-increasing path 41b and the bypass path 51 is composed of the second on-off valve 61b, the third on-off valve 63 and the fifth on-off valve 62b.

The path selecting means can include setting means which sets path selection and control means which controls the path selection.

A first atmosphere taking-in path 71a is connected to the first pressure-increasing path 41a which connects the first on-off valve 61a and the first pressure-increasing means 30a to each other. One end of the first atmosphere taking-in path 71a opens into atmosphere and the other end thereof is connected to the first pressure-increasing path 41a. The first atmosphere taking-in path 71a is provided with a sixth on-off valve 72a.

A first atmosphere path 73a is connected to the first pressure-increasing path 41a which connects the first pressure-increasing means 30a and the fourth on-off valve 62a to each other. One end of the first atmosphere path 73a is connected to the first pressure-increasing path 41a and the other end there of is connected to a seventh on-off valve 74a.

The atmosphere taking-in means which takes in air from atmosphere into the first pressure-increasing means 30a is composed of the first atmosphere taking-in path 71a and the sixth on-off valve 72a.

A second atmosphere taking-in path 71b is connected to the second pressure-increasing path 41b which connects the second on-off valve 61b and the second pressure-increasing means 30b to each other. One end of the second atmosphere taking-in path 71b opens into atmosphere and the other end thereof is connected to the second pressure-increasing path 41b. The second atmosphere taking-in path 71b is provided with an eighth on-off valve 72b.

A second atmosphere path 73b is connected to the second pressure-increasing path 41b which connects the second pressure-increasing means 30b and the fifth on-off valve 62b to each other. One end of the second atmosphere path 73b is connected to the second pressure-increasing path 41b and the other end thereof is connected to a ninth on-off valve 74b.

Atmosphere taking-in means which takes in air from atmosphere into the second pressure-increasing means 30b is composed of the second atmosphere taking-in path 71b and the eighth on-off valve 72b.

The air supply port 80 shown in Fig. 1 is composed of an S1 starboard-side supply port 81, an S2 starboard-side supply port 82, an S3 starboard-side supply port 83, a P1 port-side supply port 84, a P2 port-side supply port 85, and a P3 port-side supply port 86.

An S1 supply path 91 is connected to the S1 starboard-side supply port 81. An S2 supply path 92 is connected to the S2 starboard-side supply port 82. An S3 supply path 93 is connected to the S3 starboard-side supply port 83. A P1 supply path 94 is connected to the P1 port-side supply port 84. A P2 supply path 95 is connected to the P2 port-side supply port 85. A P3 supply path 96 is connected to the P3 port-side supply port 86.

The S1 supply path 91 is provided with an S1 on-off valve 101. The S2 supply path 92 is provided with an S2 on-off valve 102. The S3 supply path 93 is provided with an S3 on-off valve 103. The P1 supply path 94 is provided with a P1 on-off valve 104. The P2 supply path 95 is provided with a P2 on-off valve 105. The P3 supply path 96 is provided with a P3 on-off valve 106.

An outflow side path of the fourth on-off valve 62a branches into a plurality of paths, and is connected to the S1 supply path 91, the S2 supply path 92, the S3 supply path 93, the P1 supply path 94, the P2 supply path 95 and the P3 supply path 96.

An outflow side path of the fifth on-off valve 62b branches into a plurality of paths, and is connected to the S1 supply path 91, the S2 supply path 92, the S3 supply path 93, the P1 supply path 94, the P2 supply path 95 and the P3 supply path 96.

An outflow side path of the bypass path 51 branches into a plurality of paths, and is connected to the S1 supply path 91, the S2 supply path 92, the S3 supply path 93, the P1 supply path 94, the P2 supply path 95 and the P3 supply path 96.

An outflow side path 75a of the seventh on-off valve 74a is connected to the S1 starboard-side supply port 81.

An outflow side path 75b of the ninth on-off valve 74b is connected to the P1 port-side supply port 84.

The air supply apparatus 7 further includes control means 110 which controls the taking-out means, the path selecting means, the first pressure-increasing means 30a and the atmosphere taking-in means. The air supply apparatus 7 further includes draft detecting means 111 which detects draft of the ship's hull 1, load detecting means 112 which detects a load of the main engine 6, and ship's hull movement detecting means 113 which detects movement of the ship's hull 1.

The load detecting means 112 detects a load based on scavenging gas pressure of the turbocharger 10.

The control means 110 carries out control based on a result of detection of at least one of the draft detecting means 111, the load detecting means 112 and the ship's hull movement detecting means 113.

The ship's hull movement detection value of the ship's hull movement detecting means 113 can control the flow rate adjusting valve 22 and/or the first pressure-increasing means 30a by feedforward. In this case, by feedforward control, variation of draft or the like is forecasted from a ship' s hull movement detection value to control the flow rate adjusting valve 22 and the first pressure-increasing means 30a, and it is possible to control an air supply system which relatively slowly responds without reply delay. Conceptually, rough and quick control is carried out by feedforward control and fine control is carried out by feedback control.

Fig. 2 shows only control concerning the first pressure-increasing means 30a, but the second pressure-increasing means 30b can also be controlled based on a similar configuration. In this case, the blower controller 33 can be provided with a control function. It is preferable that blowers whose rotational speed can be controlled are used for the first pressure-increasing means 30a and the second pressure-increasing means 30b.

Next, the air supply port will be described using Figs. 2 to 4.

Fig. 2 shows paths which increase pressure of scavenging bypass gas and eject the same from the air supply port.

Pressurized air from the taking-out path 21 is guided into the first pressure-increasing path 41a by the path selecting means, and pressure thereof is increased by the first pressure-increasing means 30a. Thereafter, the pressurized air is guided into the S1 supply path 91, the S2 supply path 92, the P1 supply path 94 and the P2 supply path 95, and is ejected from the S1 starboard-side supply port 81, the S2 starboard-side supply port 82, the P1 port-side supply port 84 and the P2 port-side supply port 85.

The path selecting means opens the first on-off valve 61a and the fourth on-off valve 62a, and closes the second on-off valve 61b, the third on-off valve 63 and the fifth on-off valve 62b, thereby guiding pressurized air from the taking-out path 21 into the first pressure-increasing path 41a.

When pressure of scavenging bypass gas is increased and it is ejected, air from atmosphere is not taken in. Therefore, the sixth on-off valve 72a, the seventh on-off valve 74a, the eighth on-off valve 72b and the ninth on-off valve 74b are closed.

Pressure-increased air is ejected from the S1 starboard-side supply port 81, the S2 starboard-side supply port 82, the P1 port-side supply port 84 and the P2 port-side supply port 85. Therefore, the S1 on-off valve 101, the S2 on-off valve 102, the P1 on-off valve 104 and the P2 on-off valve 105 are opened, and the S3 on-off valve 103 and the P3 on-off valve 106 are closed.

The paths shown in Fig. 2 are effective when the ship is fully loaded and output of the main engine 6 is low. That is, when the ship is fully loaded, draft pressure becomes high, and when pressurized air pressure supplied to the main engine 6 is lowered, if pressure-increased air assisted by the first pressure-increasing means 30a is ejected, it is possible to eject air which reduces friction resistance.

Here, a rise of draft pressure is detected by the draft detecting means 111, reduction in pressurized air pressure supplied to the main engine 6 is detected by the load detecting means 112.

Therefore, if the draft detecting means 111 detects the rise of draft pressure and the load detecting means 112 detects the reduction of pressurized air pressure, the control means 110 controls the path selecting means, other on-off valves, the first pressure-increasing means 30a and the second pressure-increasing means 30b, and the first pressure-increasing means 30a is assisted.

Fig. 3 shows paths which eject scavenging bypass gas from the air supply port without increasing pressure of the scavenging bypass gas.

Pressurized air from the taking-out path 21 is guided into the bypass path 51 by the path selecting means. Thereafter, the pressurized air is guided into the S1 supply path 91, the S2 supply path 92, the P1 supply path 94 and the P2 supply path 95, and the pressurized air is ejected from the S1 starboard-side supply port 81, the S2 starboard-side supply port 82, the P1 port-side supply port 84 and the P2 port-side supply port 85.

The path selecting means closes the first on-off valve 61a, the fourth on-off valve 62a, the second on-off valve 61b and the fifth on-off valve 62b, and opens the third on-off valve 63, thereby guiding the pressurized air from the taking-out path 21 into the bypass path 51.

When scavenging bypass gas is ejected without increasing its pressure, air from atmosphere is not taken in. Therefore, the sixth on-off valve 72a, the seventh on-off valve 74a, the eighth on-off valve 72b and the ninth on-off valve 74b are closed.

The pressurized air is ejected from the S1 starboard-side supply port 81, the S2 starboard-side supply port 82, the P1 port-side supply port 84 and the P2 port-side supply port 85. Therefore, the S1 on-off valve 101, the S2 on-off valve 102, the P1 on-off valve 104 and the P2 on-off valve 105 are opened, and the S3 on-off valve 103 and the P3 on-off valve 106 are closed.

The paths shown in Fig. 3 are effective when the ship is fully loaded and the output of the main engine 6 is high. That is, when the ship is fully loaded, draft pressure becomes high, but when pressurized air pressure supplied to the main engine 6 is high, pressurized air can be ejected without carrying out the assist by the first pressure-increasing means 30a, and it is possible to eject air which reduces friction resistance.

Here, a rise of draft pressure is detected by the draft detecting means 111, and pressurized air pressure supplied to the main engine 6 is detected by the load detecting means 112.

Therefore, even if the draft detecting means 111 detects a rise of draft pressure, if the load detecting means 112 detects sufficient pressurized air pressure, the control means 110 controls the path selecting means, other on-off valves, the first pressure-increasing means 30a and the second pressure-increasing means 30b, and the first pressure-increasing means 30a is not assisted.

Fig. 4 shows paths which separately eject scavenging bypass gas and air taken in from atmosphere from an air supply port.

Pressurized air from the taking-out path 21 is guided into the bypass path 51 by the path selecting means. Thereafter, the pressurized air is guided into the S2 supply path 92, the S3 supply path 93, the P2 supply path 95 and the P3 supply path 96, and the pressurized air is ejected from the S2 starboard-side supply port 82, the S3 starboard-side supply port 83, the P2 port-side supply port 85 and the P3 port-side supply port 86.

Air introduced from one end of the first atmosphere taking-in path 71a is guided into the first pressure-increasing path 41a, its pressure is increased by the first pressure-increasing means 30a and then, the air is guided into the first atmosphere path 73a and the outflow side path 75a and is ejected from the S1 starboard-side supply port 81.

Air introduced from one end of the second atmosphere taking-in path 71b is guided into the second pressure-increasing path 41b, pressure thereof is increased by the second pressure-increasing means 30b and then, the air is guided into the second atmosphere path 73b and the outflow side path 75b and is ejected from the P1 port-side supply port 84.

The path selecting means closes the first on-off valve 61a, the fourth on-off valve 62a, the second on-off valve 61b and the fifth on-off valve 62b, and opens the third on-off valve 63, thereby guiding pressurized air from the taking-out path 21 into the bypass path 51.

Since air from atmosphere is taken in, the sixth on-off valve 72a, the seventh on-off valve 74a, the eighth on-off valve 72b and the ninth on-off valve 74b are opened.

Pressurized air is ejected from the S2 starboard-side supply port 82, the S3 starboard-side supply port 83, the P2 port-side supply port 85 and the P3 port-side supply port 86. Therefore, the S2 on-off valve 102, the S3 on-off valve 103, the P2 on-off valve 105 and the P3 on-off valve 106 are opened, and the S1 on-off valve 101 and the P1 on-off valve 104 are closed.

The paths shown in Fig. 4 are effective when the ship has no load and ballast water is supplied into a ballast tank. That is, since draft pressure becomes low when the ship has no load and ballast water is supplied into a ballast tank, pressurized air supplied to the main engine 6 can be ejected without carrying out the assist by the first pressure-increasing means 30a, and it is possible to eject air which reduces friction resistance. Since draft pressure is low when the ship has no load and ballast water is supplied into a ballast tank, large energy is not required for operating the first pressure-increasing means 30a and the second pressure-increasing means 30b. Therefore, if the first pressure-increasing means 30a and the second pressure-increasing means 30b are operated and air taken in from atmosphere is used, an effect for reducing friction resistance becomes greater than a loss of energy which is required for operating the first pressure-increasing means 30a and the second pressure-increasing means 30b.

Reduction of draft pressure when the ship has no load and ballast water is supplied into a ballast tank is detected by the draft detecting means 111.

Therefore, when the reduction of draft pressure is detected by the draft detecting means 111, the path selecting means, the other on-off valves, the first pressure-increasing means 30a and the second pressure-increasing means 30b are controlled by the control means 110, the scavenging bypass gas is discharged and air taken in from atmosphere is also ejected.

Next, a switching method of paths will be described.

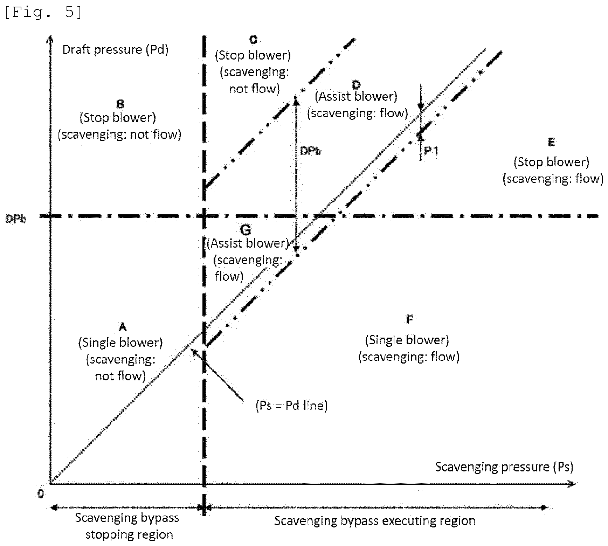

In Fig. 5, a lateral axis shows scavenging pressure (Ps) and a vertical axis shows draft pressure (Pd). The switching method under respective conditions will be described.

When the scavenging pressure (Ps) is equal to or less than a predetermined value, scavenging bypass is not carried out (scavenging bypass stopping region), and when the scavenging pressure (Ps) exceeds the predetermined value, the scavenging bypass is carried out (scavenging bypass executing region).

A region A is the scavenging bypass stopping region, and draft pressure is equal to or less than a predetermined value (DPb) and Pd > Ps is satisfied. In the region A, the first pressure-increasing means 30a and the second pressure-increasing means 30b are operated and the air taken in from atmosphere is used. Here, the predetermined value (DPb) is pressure in which a reduction effect of friction resistance caused by ejection of air becomes greater than a loss of energy which is required for the first pressure-increasing means 30a and the second pressure-increasing means 30b.

The region B is the scavenging bypass stopping region and in this region, the draft pressure is higher than the predetermined value (DPb). In the region B, a loss of energy which is required for the first pressure-increasing means 30a and the second pressure-increasing means 30b is greater than the reduction effect of the friction resistance caused by ejection of air. Therefore, air is not ejected to the surroundings of the ship's hull 1.

A region C is the scavenging bypass executing region and in this region, DPb + Pd > Ps - P1 is satisfied. Since the loss of energy is greater than the reduction effect of the friction resistance caused by ejection of air in the region C, air is not ejected to the surroundings of the ship's hull 1. Here, P1 is loss pressure in a path.

A region D is a scavenging bypass executing region and in this region, draft pressure is higher than the predetermined value (DPb), Pd > Ps - P1, and DPb + Pd < Ps - P1 are satisfied. In the region D, pressure of scavenging bypass gas is increased and the gas is ejected (Fig. 2).

A region E is a scavenging bypass executing region and in this region, draft pressure is higher than the predetermined value (DPb) and Pd < Ps - P1 is satisfied. In the region E, scavenging bypass gas is ejected without increasing its pressure (Fig. 3).

A region F is a scavenging bypass executing region and in this region, the draft pressure is equal to or less than the predetermined value (DPb), and Pd < Ps - P1 is satisfied. In the region F, scavenging bypass gas and air taken in from atmosphere are separately ejected (Fig. 4).

A region G is a scavenging bypass executing region and in this region, draft pressure is equal to or less than the predetermined value (DPb) and Pd > Ps - P1 and DPb + Pd < Ps - P1 are satisfied. In the region G, pressure of scavenging bypass gas is increased and the gas is ejected (Fig. 2). In the region G, although operation only by the blower can be carried out, assist blower is carried out, energy required for driving the blower is reduced utilizing excessive scavenging, and energy efficiency is taken into consideration.

As described above, according to this embodiment, the air supply apparatus of the air lubrication type ship includes the turbocharger 10 which supplies pressurized air to the main engine 6 of the air lubrication type ship, the taking-out means which takes out a portion of the pressurized air, the first pressure-increasing means 30a which further increases pressure of the pressurized air which is taken out by the taking-out means, the first pressure-increasing path 41a which supplies pressure-increased air whose pressure is increased by the first pressure-increasing means 30a, the bypass path 51 which bypasses the first pressure-increasing means 30a, and the path selecting means which selects the first pressure-increasing path 41a and the bypass path 51, the path selecting means selects the first pressure-increasing path 41a and/or the bypass path 51, pressure-increased air and/or pressurized air is supplied and it is ejected to surroundings of a ship's hull. According to this, when the bypass path 51 is selected, air is ejected to the surroundings of the ship's hull 1 using pressurized air which is supplied to the main engine 6, and when the first pressure-increasing path 41a is selected, air can be ejected to the surroundings of the ship's hull 1 using pressure-increased air which is obtained by further increasing pressure of pressurized air by the first pressure-increasing means 30a. That is, it is possible to select between two cases, i.e., a case where only pressurized air is ejected and a case where pressure-increased air assisted by the first pressure-increasing means 30a is ejected. Therefore, even if pressurized air pressure supplied to the main engine 6 is varied by output of the main engine 6, or even if draft pressure is varied by a loaded state, it is possible to increase pressure of the pressurized air in accordance with such variation and to eject the pressurized air. Therefore, it is possible to realize the air lubrication type ship having high energy efficiency and capable of enhancing the energy saving effect.

Further, according to the embodiment, the air supply apparatus of the air lubrication type ship further includes the first pressure-increasing means 30a and the second pressure-increasing means 30b, the first pressure-increasing path 41a and the second pressure-increasing path 41b, as well as the first on-off valve 61a, the fourth on-off valve 62a, the second on-off valve 61b and the fifth on-off valve 62b as path selecting means, and pressure-increased air can be supplied by operating one of or both of the first pressure-increasing means 30a and the second pressure-increasing means 30b. According to this, it is possible to increase pressure of pressurized air and to eject the pressurized air in accordance with variation of pressurized air pressure and variation of draft pressure. Therefore, it is possible to further enhance the energy efficiency and the energy saving effect.

Further, according to the embodiment, the first pressure-increasing means 30a and the second pressure-increasing means 30b is further provided with the atmosphere taking-in means which takes in air from atmosphere, and pressure of air from atmosphere can be increased and the air can be supplied. According to this, air can be ejected to the surroundings of the ship's hull 1 using air from atmosphere separately from the pressurized air, and when draft pressure is low for example, air from atmosphere can be supplied to the surroundings of the ship's hull 1, and it is possible to further enhance the energy efficiency and the energy saving effect.

Further, according to the embodiment, the path selecting means selects the bypass path 51, pressurized air is supplied through the bypass path 51 bypassing the first pressure-increasing means 30a and the second pressure-increasing means 30b, the atmosphere taking-in means is controlled, pressure of air from atmosphere is increased, and the air is supplied through the first pressure-increasing path 41a and the second pressure-increasing path 41b. According to this, the bypass path 51 supplies pressurized air, the first pressure-increasing path 41a and the second pressure-increasing path 41b supply air from atmosphere, thereby increasing an ejecting amount of air to surroundings of the ship's hull 1, and it is possible to further enhance the friction reducing effect and the energy saving effect.

According to the embodiment, pressurized air which is taken out by the taking-out means utilizes scavenging gas as a portion of pressurized air sent to the main engine 6 from the compressor 12 which configures the turbocharger 10. According to this, it is possible to reduce energy which is required for the first pressure-increasing means 30a.

According to the embodiment, the air supply apparatus of the air lubrication type ship further includes the draft detecting means 111 which detects draft of the ship's hull 1, and the control means 110 which controls the path selecting means and the first pressure-increasing means 30a, and the control means 110 carries out control based on a detection result of the draft detecting means 111. According to this, the draft detecting means 111 can detect variation of the draft pressure caused by a loaded state, the control means 110 carries out control suitable for the draft pressure, pressurized air and pressure-increased air can be provided in appropriate combination, it is possible to reliably set a condition under which air lubrication can be applied, and it is possible to select an air supply method which becomes that condition and which has high energy efficiency.

According to the embodiment, the air supply apparatus of the air lubrication type ship further includes the load detecting means 112 which detects a load of the main engine 6, and the control means 110 carries out control based on a detection result of the load detecting means 112. According to this, the load detecting means 112 can detect variation of pressurized air pressure caused by output of the main engine 6, the control means 110 can carries out control suitable for the pressurized air pressure, and it is possible to select an air supply method which has high energy efficiency.

According to the embodiment, the load detecting means 112 detects scavenging gas pressure of the turbocharger 10. According to this, since it is possible to detect variation of the pressurized air pressure without time lag, and to carries out control to follow variation of a load, and it is possible to enhance the energy efficiency.

According to the embodiment, the air supply apparatus of the air lubrication type ship includes the flow rate adjusting valve 22 provided between the turbocharger 10 and the first pressure-increasing means 30a or the second pressure-increasing means 30b, and the flow rate adjusting valve 22 adjusts a flow rate of pressurized air. According to this, it is possible to moderate flow rate variation generated by influence of an operation state of the first pressure-increasing means 30a or the second pressure-increasing means 30b, to stabilize a supply flow rate of pressurized air from the turbocharger 10 to the main engine 6, and to prevent the energy efficiency of the main engine 6 from being deteriorated.

According to the embodiment, the air supply apparatus of the air lubrication type ship includes the flow rate detecting means 31 which detects a flow rate of pressurized air from the turbocharger 10 to the first pressure-increasing means 30a or the second pressure-increasing means 30b. According to this, it is possible to stably control the flow rate of pressurized air.

According to the embodiment, a flow rate detection value detected by the flow rate detecting means 31 is fed back and the flow rate adjusting valve 22 is controlled. According to this, it is possible to carry out control to take out a pressurized air amount in accordance with a set flow rate, and it is possible to appropriately maintain the pressurized air amount to the main engine 6, and to effectively enhance a pressure increasing effect at the first pressure-increasing means 30a or the second pressure-increasing means 30b. Further, when a trouble is generated in the first pressure-increasing means 30a or the second pressure-increasing means 30b, since it is possible to adjust the scavenging pressure by the flow rate adjusting valve 22, no trouble is given to the main engine 6 and safety is high.

According to the embodiment, a flow rate detection value detected by an opening degree of the flow rate adjusting valve 22 is fed back, and the first pressure-increasing means 30a or the second pressure-increasing means 30b is controlled. According to this, it is possible to control the first pressure-increasing means 30a or the second pressure-increasing means 30b in accordance with a set opening degree or a set flow rate to obtain a predetermined flow rate.

According to the embodiment, a blower whose rotational speed can be controlled is used as the first pressure-increasing means 30a or the second pressure-increasing means 30b. According to this, it is possible to carries out the pressure increasing adjustment in accordance with variation of pressurized air pressure or variation of draft pressure.

According to the embodiment, the air supply apparatus of the air lubrication type ship further includes the ship's hull movement detecting means 113 which detects movement of the ship's hull 1, a ship's hull movement detection value of the ship's hull movement detecting means 113 is fed forward to control the flow rate adjusting valve 22 and/or first pressure-increasing means 30a (or second pressure-increasing means 30b). According to this, it is possible to forecast variation of draft or the like from the ship's hull movement detection value, to change the combination of pressurized air and pressure-increased air, and to control a flow rate.

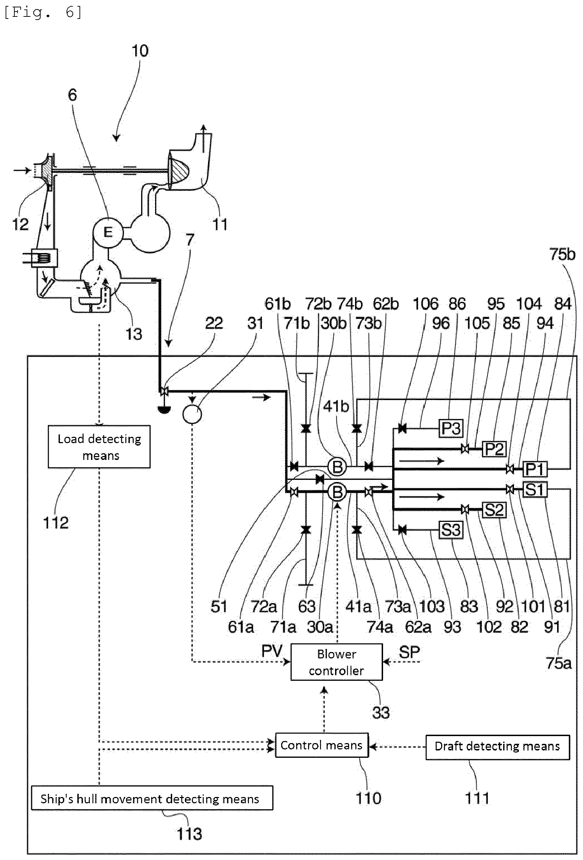

A configuration of an air supply apparatus according to another embodiment will be described using Fig. 6.

Fig. 6 is a schematic block diagram of the air supply apparatus according to the other embodiment of the air lubrication type ship. The same symbols are allocated to members having the same functions as those of the previously described embodiment, and description thereof will be omitted.

The blower controller 33 in this embodiment feeds back a flow rate detection value detected by the flow rate detecting means 31 to control the first pressure-increasing means 30a. The flow rate adjusting valve 22 is fully opened, and control is carried out to close the flow rate adjusting valve 22 when an abnormal state occurs.

According to the embodiment, it is possible to control the first pressure-increasing means 30a with excellent response.

Although Fig. 6 shows only control concerning the first pressure-increasing means 30a, the second pressure-increasing means 30b can also be controlled based on a similar configuration.

It is preferable that blowers whose rotational speed can be controlled are used for the first pressure-increasing means 30a and the second pressure-increasing means 30b.

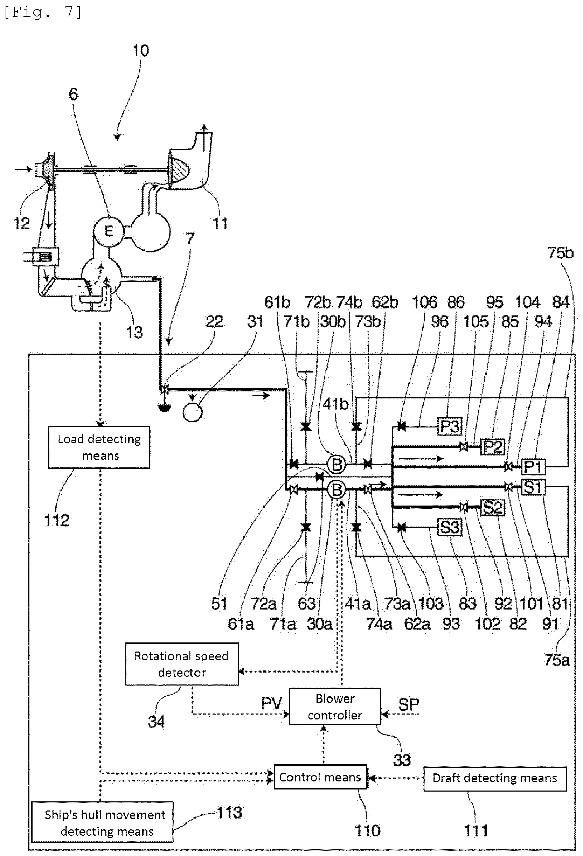

A configuration of an air supply apparatus according to another embodiment will be described using Fig. 7.

Fig. 7 is a schematic block diagram of the air supply apparatus according to the other embodiment of the air lubrication type ship. The same symbols are allocated to members having the same functions as those of the previously described embodiment, and description thereof will be omitted.

The blower controller 33 in this embodiment detects the rotational speed of the first pressure-increasing means 30a, feeds back a detected rotation number detection value and controls the first pressure-increasing means 30a. The flow rate adjusting valve 22 is fully opened, and control is carried out to close the flow rate adjusting valve 22 when an abnormal state occurs. The flow rate adjusting valve 22 may be fed back using a flow rate detection value which is detected by the flow rate detecting means 31 and may carry out the control.

According to this embodiment, since it is possible to control based on the rotational speed of the first pressure-increasing means 30a, it is possible to carry out the control without detection of the flow rate detecting means 31 or the like.

Although Fig. 7 shows only control concerning the first pressure-increasing means 30a, the second pressure-increasing means 30b can also be controlled based on a similar configuration.

It is preferable that blowers whose rotational speed can be controlled are used for the first pressure-increasing means 30a and the second pressure-increasing means 30b.

### [INDUSTRIAL APPLICABILITY]

According to the present invention, it is possible to increase pressure of pressurized air and eject the pressurized air in accordance with supplied gas pressure which is varied depending upon output of the main engine and draft pressure which is varied depending upon a loaded state. Hence, the invention can be utilized as an air supply apparatus of an air lubrication type ship having high energy efficiency.

The idea of the invention can be applied not only to a ship but also to a floating body and a marine navigation body which temporarily marine navigate.

## Claims

1. An air supply apparatus (7) of an air lubrication type ship which ejects air to surroundings of a ship's hull (1) to reduce friction resistance, the air supply apparatus (7) comprising
a turbocharger (10)which supplies pressurized air to a main engine (6) of the air lubrication type ship, taking-out means (21, 22, 31, 32) which takes out a portion of the pressurized air, pressure-increasing means (30a, 30b) which further increases pressure of the pressurized air which is taken out by the taking-out means(21, 22, 31, 32), a pressure-increasing path (41a, 41b) through which pressure-increased air whose pressure is increased by the pressure-increasing means (30a, 30b) is supplied, a bypass path (51) which bypasses the pressure-increasing means (30a, 30b), and path selecting means (61a, 61b, 63, 62a, 62b) which selects the pressure-increasing path (41a, 41b) and the bypass path (51), wherein the path selecting means (61a, 61b, 63, 62a, 62b) selects the pressure-increasing path (41a, 41b) and/or the bypass path (51) to supply the pressure-increased air and/or the pressurized air and eject the same to the surroundings of the ship's hull (1).

2. The air supply apparatus (7) of an air lubrication type ship according to claim 1, further comprising at least one more pressure-increasing means (30a, 30b), at least one more pressure-increasing path (41a, 41b) and at least one more path selecting means (61a, 61b, 63, 62a, 62b), wherein the pressure-increased air can be supplied by operation of an arbitrary number of the pressure-increasing means (30a, 30b).

3. The air supply apparatus (7) of an air lubrication type ship according to claim 1 or 2, wherein the pressure-increasing means (30a, 30b) is further provided with atmosphere taking-in means (71a, 71b, 72a, 72b) which takes in air from atmosphere, and pressure of the air from the atmosphere can be increased and the air can be supplied.

4. The air supply apparatus (7) of an air lubrication type ship according to claim 3, wherein the path selecting means (61a, 61b, 63, 62a, 62b) selects the bypass path (51), the pressurized air is supplied through the bypass path (51) while bypassing the pressure-increasing means (30a, 30b), and the atmosphere taking-in means (71a, 71b, 72a, 72b) is controlled, then pressure of air from the atmosphere is increased and the air is supplied through the pressure-increasing path (41a, 41b).

5. The air supply apparatus (7) of an air lubrication type ship according to any one of claims 1 to 4, wherein the pressurized air which is taken out by the taking-out means (21, 22, 31, 32) is scavenging gas as a portion of the pressurized air sent from a compressor (12) which configures the turbocharger (10) to the main engine (6).

6. The air supply apparatus (7) of an air lubrication type ship according to any one of claims 1 to 5, further comprising draft detecting means (111) which detects draft of the ship's hull (1) and control means (110) which controls the path selecting means (61a, 61b, 63, 62a, 62b) and the pressure-increasing means (30a, 30b), wherein the control means (110) carries out control based on a detection result of the draft detecting means (111).

7. The air supply apparatus (7) of an air lubrication type ship according to claim 6, further comprising load detecting means (112) which detects a load of the main engine (6), wherein the control means (110) carries out control based on a detection result of the load detecting means (112).

8. The air supply apparatus (7) of an air lubrication type ship according to claim 7, wherein the load detecting means (112) detects scavenging gas pressure of the turbocharger (10).

9. The air supply apparatus (7) of an air lubrication type ship according to any one of claims 1 to 8, further comprising a flow rate adjusting valve (22) which is located between the turbocharger (10) and the pressure-increasing means (30a, 30b) and which adjusts a flow rate of the pressurized air.

10. The air supply apparatus (7) of an air lubrication type ship according to any one of claims 1 to 8, further comprising flow rate detecting means (31) which detects a flow rate of the pressurized air from the turbocharger (10) to the pressure-increasing means (30a, 30b).

11. The air supply apparatus (7) of an air lubrication type ship according to claim 10, wherein a flow rate detection value detected by the flow rate detecting means (31) is fed back to control the flow rate adjusting valve (22).

12. The air supply apparatus (7) of an air lubrication type ship according to any one of claims 9 to 11, wherein an opening degree of the flow rate adjusting valve (22) or a flow rate detection value detected by the flow rate detecting means (31) is fed back to control the pressure-increasing means (30a, 30b).

13. The air supply apparatus (7) of an air lubrication type ship according to any one of claims 1 to 12, wherein a blower(B) whose rotational speed can be controlled is used as the pressure-increasing means (30a, 30b).

14. The air supply apparatus (7) of an air lubrication type ship according to claim 13, wherein the rotational speed of the blower(B) is detected, and a detected rotational speed detection value is fed back to control the blower (B).

15. The air supply apparatus (7) of an air lubrication type ship according to any one of claims 9 to 14, further comprising ship's hull movement detecting means (113) which detects movement of the ship's hull (1), wherein a ship's hull movement detection value of the ship's hull movement detecting means (113) is fed forward to control the flow rate adjusting valve (22) and/or the pressure-increasing means (30a, 30b).

## Patentansprüche

1. Luftzufuhrvorrichtung (7) eines Schiffs vom Luftschmierungstyp, die Luft an die Umgebung eines Schiffskörpers (1) ausstößt, um einen Reibungswiderstand zu verringern, wobei die Luftzufuhrvorrichtung (7) umfasst:
- einen Turbolader (10), der Druckluft einer Haupt- bzw. Antriebsmaschine (6) des Schiffs vom Luftschmierungstyp zuführt,
- eine Entnahmeeinrichtung (21, 22, 31, 32), die einen Teil der Druckluft entnimmt,
- eine Druckerhöhungseinrichtung (30a, 30b), die den Druck der durch die Entnahmeeinrichtung (21, 22, 31, 32) entnommenen Druckluft weiter erhöht,
- einen Druckerhöhungspfad (41a, 41b), durch den die im Druck erhöhte Luft, deren Druck durch die Druckerhöhungseinrichtung (30a, 30b) erhöht ist, zugeführt wird,
- einen Umleitungspfad (51), der die Druckerhöhungseinrichtung (30a, 30b) umgeht,
- und eine Pfad-Auswahleinrichtung (61a, 61b, 63, 62a, 62b), die den Druckerhöhungspfad (41a, 41b) und den Umleitungspfad (51) auswählt, wobei die Pfad-Auswahleinrichtung (61a, 61b, 63, 62a, 62b) den Druckerhöhungspfad (41a, 41b) und/oder den Umleitungspfad (51) auswählt, um die im Druck erhöhte Luft und/oder die Druckluft zuzuführen und dieselbe an die Umgebung des Schiffskörpers (1) auszustoßen.

2. Luftzufuhrvorrichtung (7) eines Schiffs vom Luftschmierungstyp nach Anspruch 1, ferner umfassend zumindest eine weitere Druckerhöhungseinrichtung (30a, 30b), zumindest einen weiteren Druckerhöhungspfad (41a, 41b) und zumindest eine weitere Pfad-Auswahleinrichtung (61a, 61b, 63, 62a, 62b), wobei die im Druck erhöhte Luft durch den Betrieb einer beliebigen Anzahl der Druckerhöhungseinrichtungen (30a, 30b) zugeführt werden kann.

3. Luftzufuhrvorrichtung (7) eines Schiffs vom Luftschmierungstyp nach Anspruch 1 oder 2, wobei die Druckerhöhungseinrichtung (30a, 30b) ferner mit einer Atmosphären-Aufnahmeeinrichtung (71a, 71b, 72a, 72b) versehen ist, die Luft aus der Atmosphäre aufnimmt, und wobei der Druck der Luft aus der Atmosphäre erhöht werden kann und die Luft zugeführt werden kann.

4. Luftzufuhrvorrichtung (7) eines Schiffs vom Luftschmierungstyp nach Anspruch 3, wobei die Pfad-Auswahleinrichtung (61a, 61b, 63, 62a, 62b) den Umleitungsweg (51) auswählt, die Druckluft durch den Umleitungsweg (51) zugeführt wird, während die Druckerhöhungseinrichtung (30a, 30b) umgangen ist,
und die Atmosphären-Aufnahmeeinrichtung (71a, 71b, 72a, 72b) gesteuert wird und der Druck der Luft dann aus der Atmosphäre erhöht wird und die Luft durch den Druckerhöhungspfad (41a, 41b) zugeführt wird.

5. Luftzufuhrvorrichtung (7) eines Schiffs vom Luftschmierungstyp nach einem der Ansprüche 1 bis 4, wobei die durch die Entnahmeeinrichtung (21, 22, 31, 32) entnommene Druckluft Spülgas als Teil der Druckluft ist, die von einem Kompressor (12) geliefert wird, der den Turbolader (10) für die Haupt- bzw. Antriebsmaschine (6) konfiguriert.

6. Luftzufuhrvorrichtung (7) eines Schiffs vom Luftschmierungstyp nach einem der Ansprüche 1 bis 5, ferner umfassend eine Tiefgang-Detektiereinrichtung (111), die den Tiefgang des Schiffskörpers (1) detektiert, und eine Steuereinrichtung (110), die die Pfad-Auswahleinrichtung (61a, 61b, 63, 62a, 62b) und die Druckerhöhungseinrichtung (30a, 30b) steuert, wobei die Steuereinrichtung (110) eine Steuerung auf der Grundlage eines Detektierergebnisses der Tiefgang-Detektiereinrichtung (111) ausführt.

7. Luftzufuhrvorrichtung (7) eines Schiffs vom Luftschmierungstyp nach Anspruch 6, ferner umfassend eine Belastungs-Detektiereinrichtung (112), die eine Belastung der Haupt- bzw. Antriebsmaschine (6) detektiert, wobei die Steuereinrichtung (110) eine Steuerung auf der Grundlage eines Detektierergebnisses der Belastungs-Detektiereinrichtung (112) ausführt.

8. Luftzufuhrvorrichtung (7) eines Schiffs vom Luftschmierungstyp nach Anspruch 7, wobei die Belastungs-Detektiereinrichtung (112) den Spülgasdruck des Turboladers (10) detektiert.

9. Luftzufuhrvorrichtung (7) eines Schiffs vom Luftschmierungstyp nach einem der Ansprüche 1 bis 8, ferner umfassend ein Strömungsraten-Einstellventil (22), welches sich zwischen dem Turbolader (10) und der bzw. den Druckerhöhungseinrichtung(en) (30a, 30b) befindet und welches eine Strömungsrate der Druckluft einstellt.

10. Luftzufuhrvorrichtung (7) eines Schiffs vom Luftschmierungstyp nach einem der Ansprüche 1 bis 8, ferner umfassend eine Strömungsraten-Detektiereinrichtung (31), die eine Strömungsrate der Druckluft von dem Turbolader (10) zu der bzw. den Druckerhöhungseinrichtung(en) (30a, 30b) detektiert.

11. Luftzufuhrvorrichtung (7) eines Schiffs vom Luftschmierungstyp nach Anspruch 10, wobei ein durch die Strömungsraten-Detektiereinrichtung (31) detektierter Strömungsraten-Detektierwert zur Steuerung des Strömungsraten-Einstellventils (22) zurückgekoppelt wird.

12. Luftzufuhrvorrichtung (7) eines Schiffs vom Luftschmierungstyp nach einem der Ansprüche 9 bis 11, wobei ein Öffnungsgrad des Strömungsraten-Einstellventils (22) oder ein durch die Strömungsraten-Detektiereinrichtung (31) detektierter Strömungsraten-Detektierwert zur Steuerung der Druckerhöhungseinrichtung (30a, 30b) zurückgekoppelt wird.

13. Luftzufuhrvorrichtung (7) eines Schiffs vom Luftschmierungstyp nach einem der Ansprüche 1 bis 12, wobei ein Gebläse (B), dessen Drehzahl gesteuert werden kann, als Druckerhöhungseinrichtung (30a, 30b) verwendet ist.

14. Luftzufuhrvorrichtung (7) eines Schiffs vom Luftschmierungstyp nach Anspruch 13, wobei die Drehzahl des Gebläses (B) detektiert wird und wobei ein detektierter Drehzahl-Detektierwert zur Steuerung des Gebläses (B) zurückgekoppelt wird.

15. Luftzufuhrvorrichtung (7) eines Schiffs vom Luftschmierungstyp nach einem der Ansprüche 9 bis 14, ferner umfassend eine Schiffskörperbewegungs-Detektiereinrichtung (113), welche eine Bewegung des Schiffskörpers (1) detektiert,
wobei ein Schiffskörperbewegungs-Detektierwert der Schiffskörperbewegungs-Detektiereinrichtung (113) zur Steuerung des Strömungsraten-Einstellventils (22) und/oder der Druckerhöhungseinrichtung(en) (30a, 30b) vorwärts gekoppelt wird.

## Revendications

1. Appareil d'alimentation en air (7) d'un navire de type à lubrification par air qui éjecte l'air aux alentours d'une coque (1) de bateau pour réduire la résistance de friction, l'appareil d'alimentation en air (7) comprenant :
un turbocompresseur (10) qui fournit l'air sous pression à un moteur principal (6) du navire de type à lubrification par air, un moyen de prélèvement (21, 22, 31, 32) qui prélève une partie de l'air sous pression, un moyen d'augmentation de pression (30a, 30b) qui augmente davantage la pression de l'air sous pression qui est prélevé par le moyen de prélèvement (21, 22, 31, 32), une trajectoire d'augmentation de pression (41a, 41b) par laquelle l'air augmenté en pression dont la pression est augmentée par le moyen d'augmentation de pression (30a, 30b) est fourni, une trajectoire de dérivation (51) qui contourne le moyen d'augmentation de pression (30a, 30b) et un moyen de sélection de trajectoire (61a, 61b, 63, 62a, 62b) qui sélectionne la trajectoire d'augmentation de pression (41a, 41b) et la trajectoire de dérivation (51), dans lequel le moyen de sélection de trajectoire (61a, 61b, 63, 62a, 62b) sélectionne la trajectoire d'augmentation de pression (41a, 41b) et/ou la trajectoire de dérivation (51) pour fournir l'air augmenté en pression et/ou l'air sous pression et éjecter ce dernier aux alentours de la coque (1) du navire.

2. Appareil d'alimentation en air (7) d'un navire de type à lubrification par air selon la revendication 1, comprenant en outre au moins un autre moyen d'augmentation de pression (30a, 30b), au moins une autre trajectoire d'augmentation de pression (41a, 41b) et au moins un autre moyen de sélection de trajectoire (61a, 61b, 63, 62a, 62b), dans lequel l'air augmenté en pression peut être fourni en actionnant un nombre arbitraire de moyens d'augmentation de pression (30a, 30b).

3. Appareil d'alimentation en air (7) d'un navire de type à lubrification par air selon la revendication 1 ou 2, dans lequel le moyen d'augmentation de pression (30a, 30b) est en outre prévu avec un moyen de prise d'air dans l'atmosphère (71a, 71b, 72a, 72b) qui prend l'air de l'atmosphère et la pression de l'air provenant de l'atmosphère peut être augmentée et l'air peut être fourni.

4. Appareil d'alimentation en air (7) d'un navire de type à lubrification par air selon la revendication 3, dans lequel le moyen de sélection de trajectoire (61a, 61b, 63, 62a, 62b) sélectionne la trajectoire de dérivation (51), l'air sous pression est fourni par la trajectoire de dérivation (51) tout en contournant le moyen d'augmentation de pression (30a, 30b) et le moyen de prise d'air dans l'atmosphère (71a, 71b, 72a, 72b) est contrôlé, alors la pression de l'air provenant de l'atmosphère est augmentée et l'air est fourni par la trajectoire d'augmentation de pression (41a, 41b).

5. Appareil d'alimentation en air (7) d'un navire de type à lubrification par air selon l'une quelconque des revendications 1 à 4, dans lequel l'air sous pression qui est prélevé par le moyen de prélèvement (21, 22, 31, 32) récupère du gaz, en tant que partie de l'air sous pression envoyée depuis un compresseur (12) qui configure le turbocompresseur (10) jusqu'au moteur principal (6).

6. Appareil d'alimentation en air (7) d'un navire de type à lubrification par air selon l'une quelconque des revendications 1 à 5, comprenant en outre un moyen de détection de tirant d'eau (111) qui détecte le tirant d'eau de la coque (1) du navire et un moyen de contrôle (110) qui contrôle le moyen de sélection de trajectoire (61a, 61b, 63, 62a, 62b) et le moyen d'augmentation de pression (30a, 30b), dans lequel le moyen de contrôle (110) réalise le contrôle en fonction d'un résultat de détection du moyen de détection de tirant d'eau (111).

7. Appareil d'alimentation en air (7) d'un navire de type à lubrification par air selon la revendication 6, comprenant en outre un moyen de détection de charge (112) qui détecte une charge du moteur principal (6), dans lequel le moyen de contrôle (110) réalise le contrôle en fonction d'un résultat de détection du moyen de détection de charge (112).

8. Appareil d'alimentation en air (7) d'un navire de type à lubrification par air selon la revendication 7, dans lequel le moyen de détection de charge (112) détecte la pression de gaz de récupération du turbocompresseur (10).

9. Appareil d'alimentation en air (7) d'un navire de type à lubrification par air selon l'une quelconque des revendications 1 à 8, comprenant en outre une valve d'ajustement de débit (22) qui est positionnée entre le turbocompresseur (10) et le moyen d'augmentation de pression (30a, 30b) et qui ajuste un débit de l'air sous pression.

10. Appareil d'alimentation en air (7) d'un navire de type à lubrification par air selon l'une quelconque des revendications 1 à 8, comprenant en outre un moyen de détection de débit (31) qui détecte un débit de l'air sous pression, du turbocompresseur (10) jusqu'au moyen d'augmentation de pression (30a, 30b).

11. Appareil d'alimentation en air (7) d'un navire de type à lubrification par air selon la revendication 10, dans lequel une valeur de détection de débit détectée par le moyen de détection de débit (31) est renvoyée pour contrôler la valve d'ajustement de débit (22).

12. Appareil d'alimentation en air (7) d'un navire de type à lubrification par air selon l'une quelconque des revendications 9 à 11, dans lequel un degré d'ouverture de la valve d'ajustement de débit (22) ou une valeur de détection de débit détectée par le moyen de détection de débit (31) est renvoyé pour contrôler le moyen d'augmentation de pression (30a, 30b).

13. Appareil d'alimentation en air (7) d'un navire de type à lubrification par air selon l'une quelconque des revendications 1 à 12, dans lequel une soufflante (B) dont la vitesse de rotation peut être contrôlée, est utilisée en tant que moyen d'augmentation de pression (30a, 30b).

14. Appareil d'alimentation en air (7) d'un navire de type à lubrification par air selon la revendication 13, dans lequel la vitesse de rotation de la soufflante (B) est détectée, et une valeur de détection de vitesse de rotation détectée est renvoyée pour contrôler la soufflante (B).

15. Appareil d'alimentation en air (7) d'un navire de type à lubrification par air selon l'une quelconque des revendications 9 à 14, comprenant en outre un moyen de détection de déplacement de coque de navire (113) qui détecte le mouvement de la coque (1) du navire, dans lequel une valeur de détection de déplacement de coque de navire du moyen de détection de déplacement de coque de navire (113) est fournie pour contrôler la valve d'ajustement de débit (22) et/ou le moyen d'augmentation de pression (30a, 30b).
